# EUROPÄISCHE PATENTANMELDUNG

(11) **EP 3 798 045 A1**
(43) Veröffentlichungstag der Anmeldung: **31.03.2021**
(21) Anmeldenummer: 19199784.0
(22) Anmeldetag: 26.09.2019
(51) Int. Cl.: B60L 53/16, B60L 53/18, B60L 53/63, B60L 53/66

(54) **ANPASSEN EINER LADELEISTUNG**

(71) Anmelder: EnBW Energie Baden-Württemberg AG, 76131 Karlsruhe (DE)
(72) Erfinder: Junge, Eric, 72631 Aichtal (DE); Leiverkuß, Felix, 73033 Göppingen (DE)
(74) Vertreter: Durm Patentanwälte PartG mbB

(57) **Zusammenfassung**

Die vorliegende Erfindung betrifft eine Vorrichtung (18) zum Anpassen einer Ladeleistung beim Laden einer Batterie (12) eines Elektrofahrzeugs (14), mit: einer Ladeeinrichtungsschnittstelle (20) zum Empfangen eines Kommunikationssignals von einer Ladeeinrichtung (16), wobei das Kommunikationssignal eine Angabe eines verfügbaren Ladestroms umfasst; einer Anpassungseinheit (22) zum Ermitteln eines angepassten verfügbaren Ladestroms basierend auf einem vordefinierten Anpassungsparameter; einer Modifikationseinheit (24) zum Erzeugen eines modifizierten Kommunikationssignals mit einer Angabe des angepassten verfügbaren Ladestroms basierend auf dem empfangenen Kommunikationssignal; und einer Fahrzeugschnittstelle (26) zum Weiterleiten des modifizierten Kommunikationssignals an das Elektrofahrzeug. Die vorliegende Erfindung betrifft weiterhin ein Verfahren und ein System (10) zum Anpassen einer Ladeleistung beim Laden einer Batterie (12) eines Elektrofahrzeugs (14).

## Beschreibung

Die vorliegende Erfindung betrifft eine Vorrichtung zum Anpassen einer Ladeleistung beim Laden einer Batterie eines Elektrofahrzeugs. Die vorliegende Erfindung betrifft weiterhin ein System und ein Verfahren zum Anpassen einer Ladeleistung beim Laden einer Batterie eines Elektrofahrzeugs.

Die fortschreitende Entwicklung hin zur Elektromobilität erfordert das Bereitstellen einer entsprechenden Ladeinfrastruktur zum Laden von Elektrofahrzeugen wie Elektroautos, Elektrolastkraftwagen oder auch Elektrozweirädern. Die Ladeeinrichtungen sind dabei beispielsweise als Ladesäulen, als Wandladestationen (Wallbox) oder auch als mobile Vorrichtungen (sog. In-Cable-Control-Box, ICCB) ausgebildet.

Die Ladeeinrichtungen stellen den für das Laden der Batterien notwendigen Ladestrom bereit. Elektrofahrzeuge können zumeist im Umfeld einer Ladeeinrichtung abgestellt werden und für die Dauer des Ladevorgangs angekoppelt werden. Beim Starten eines Ladevorgangs wird zumeist eine Kommunikation zwischen der Ladeeinrichtung und dem zu ladenden Elektrofahrzeug durchgeführt, um Ladeparameter, wie insbesondere den maximalen Ladestrom, festzulegen.

Aufgrund der Heterogenität der Ladeeinrichtungen und der zu ladenden Elektrofahrzeuge gibt es in diesem Zusammenhang etablierte Standards. Beispielsweise wird im ISO 15118-Standard die Kommunikation zwischen Elektrofahrzeug bzw. Ladegerät im Elektrofahrzeug und Ladeeinrichtung beschrieben.

In der US 9,616,761 B2 wird in diesem Zusammenhang eine In-Cable-Control-Box zum Laden eines elektrischen Fahrzeugs sowie ein Ladeverfahren offenbart. Die Box umfasst eine Eingangseinheit, die eine Auswahl eines Lademodus sowie entsprechende Einstellungen empfängt. Weiterhin umfasst die Box eine Anzeigeeinheit, die einen Ladezustand anzeigt, eine Warneinheit, die ein Warngeräusch entsprechend einem Wechsel des Ladezustands ausgibt, eine Versorgungseinheit, die einem Ladegerät des Elektrofahrzeugs elektrische Leistung zur Verfügung stellt, sowie eine Kontrolleinheit, die die elektrische Leistung entsprechend dem Lademodus und den Einstellungen reguliert und die weiteren Einheiten ansteuert.

Für die Netzbetreiber besteht eine Herausforderung darin, dass mit zunehmender Anzahl von Ladeeinrichtungen bzw. mit zunehmender Anzahl von Elektrofahrzeugen die Belastungen des Stromnetzes steigen. Insbesondere ist es möglich, dass in einzelnen Bereichen eines Stromnetzes gleichzeitig sehr hohe Leistungen benötigt werden, wenn viele Elektrofahrzeuge geladen werden sollen. Eine übermäßige Belastung des Stromnetzes bzw. eines Teils des Stromnetzes kann zu Ausfällen und auch zu Materialdefekten führen.

Zum Festlegen einer maximalen Ladeleistung sind zum aktuellen Zeitpunkt im Wesentlichen drei Varianten verfügbar. Einerseits kann die maximale Ladeleistung basierend auf einer Vorgabe innerhalb des Elektrofahrzeugs festgelegt werden. Alternativ kann ein externes Steuergerät über eine Datenschnittstelle an die Ladeeinrichtung angeschlossen werden, das die jeweils maximale Ladeleistung an der Ladeeinrichtung vorgibt. Über eine solche Datenschnittstelle kann die Ladeeinrichtung beispielsweise an ein Energiemanagementsystem eines Anlagenbetreibers/Nutzers oder eines Netzbetreibers angebunden sein. Weiterhin ist es möglich, dass eine kommunikative Anbindung (z. B. Mobilfunk) des Elektrofahrzeugs an ein Backend-System verfügbar ist, beispielsweise ein Backend-System des Automobilherstellers. Über dieses Backend-System kann dann die maximale Ladeleistung vorgegeben werden. Alle genannten Ansätze weisen insbesondere hinsichtlich der Nachrüstbarkeit Nachteile auf. In keiner der Varianten können die aktuell in Umlauf befindlichen Ladeeinrichtungen und Elektrofahrzeuge unproblematisch nachgerüstet werden.

Ausgehend hiervon stellt sich der vorliegenden Erfindung die Aufgabe, unter Berücksichtigung heterogener Ladeeinrichtungen und zu ladender Fahrzeuge eine übermäßige Belastung des Stromnetzes zu vermeiden. Insbesondere soll sichergestellt werden, dass es bei einem Ladevorgang eines Elektrofahrzeugs nicht zu einer Überlastung im Stromnetz kommt.

Diese Aufgabe wird in einem ersten Aspekt der Erfindung von einer Vorrichtung zum Anpassen einer Ladeleistung beim Laden einer Batterie eines Elektrofahrzeugs gelöst. Die Vorrichtung umfasst:
- eine Ladeeinrichtungsschnittstelle zum Empfangen eines Kommunikationssignals von einer Ladeeinrichtung, wobei das Kommunikationssignal eine Angabe eines verfügbaren Ladestroms umfasst;
- eine Anpassungseinheit zum Ermitteln eines angepassten verfügbaren Ladestroms basierend auf einem vordefinierten Anpassungsparameter;
- eine Modifikationseinheit zum Erzeugen eines modifizierten Kommunikationssignals mit einer Angabe des angepassten verfügbaren Ladestroms basierend auf dem empfangenen Kommunikationssignal; und
- eine Fahrzeugschnittstelle zum Weiterleiten des modifizierten Kommunikationssignals an das Elektrofahrzeug.

Ein weiterer Aspekt der Erfindung betrifft ein System zum Anpassen einer Ladeleistung beim Laden einer Batterie eines Elektrofahrzeugs, mit:
- einer Ladeeinrichtung zum Bereitstellen eines Ladestroms und eines Kommunikationssignals mit einer Angabe eines verfügbaren Ladestroms;
- einer Vorrichtung wie zuvor beschrieben; und
- einem Elektrofahrzeug mit einer Batterie.

Weitere Aspekte der Erfindung betreffen ein entsprechend der Vorrichtung ausgebildetes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das System, das Verfahren und das Computerprogrammprodukt entsprechend der für die Vorrichtung in den abhängigen Ansprüchen beschriebenen Ausgestaltungen ausgeführt sein.

Die Erfindung bezieht sich insbesondere auf Ladevorgänge, bei denen vor Beginn des Ladens Parameter des Ladevorgangs und insbesondere des Ladestroms zwischen Elektrofahrzeug und Ladeeinrichtung ausgehandelt werden. Die Ladeeinrichtung gibt eine Angabe eines maximalen verfügbaren Ladestroms an das Elektrofahrzeug weiter und das Elektrofahrzeug wählt den tatsächlichen Ladestrom basierend auf dieser Angabe. Erfindungsgemäß wird ein Kommunikationssignal der Ladeeinrichtung, das eine Angabe eines verfügbaren Ladestroms beinhaltet, abgefangen, bevor sie ein angeschlossenes Elektrofahrzeug erreicht. Insbesondere ist es möglich, den Ladestrom zu verringern, um die Netzbelastung zu optimieren. Es wird in anderen Worten also in die Kommunikation zwischen Ladeeinrichtung und Elektrofahrzeug eingegriffen und eine modifizierte Angabe eines verfügbaren Ladestroms an das Elektrofahrzeug weitergegeben. Das Elektrofahrzeug lädt dann mit einem geringeren Ladestrom. Hierdurch kann die Netzbelastung verringert werden.

Die erfindungsgemäße Lösung ist dabei weitgehend universell einsetzbar und nachrüstbar für verschiedene verfügbare Ladeeinrichtungen und Elektrofahrzeuge. Technische Nachrüstungen an der Ladeeinrichtung, der zugehörigen Elektroinstallation und dem Elektrofahrzeug sind nicht notwendig. Eine einfache Nachrüstbarkeit (Plug and Play) auch unter Berücksichtigung der aktuell vorhandenen heterogenen Ladeeinrichtungen und Elektrofahrzeuge wird erreicht. Es ist ein störungsfreier Betrieb von Ladeeinrichtung und Elektrofahrzeug möglich. Es ergibt sich eine kostengünstig realisierbare Möglichkeit für intelligentes Lademanagement zur Optimierung der Netzauslastung.

In einer bevorzugten Ausgestaltung ist die Modifikationseinheit zum Erzeugen des modifizierten Kommunikationssignals durch Ersetzen der Angabe des verfügbaren Ladestroms durch die Angabe des angepassten verfügbaren Ladestroms in dem empfangenen Kommunikationssignal ausgebildet. In anderen Worten wird das Kommunikationssignal, das von der Ladeeinrichtung empfangen wurde, unverändert weitergegeben, abgesehen davon, dass die Angabe des verfügbaren Ladestroms ersetzt wird. Die Kommunikation zwischen Ladeeinrichtung und Elektrofahrzeug bzw. Ladegerät des Elektrofahrzeugs bleibt ansonsten unverändert. Es ergibt sich eine hohe Kompatibilität. Zudem bleibt die Sicherheit des Ladevorgangs erhalten.

In einer bevorzugten Ausgestaltung sind die Kommunikationssignale Pulsweitenmodulationssignale (PWM-Signale) und umfasst die Modifikationseinheit einen PWM-Manipulator. In verschiedenen weit verbreiteten Ladeansätzen für Elektrofahrzeuge werden Pulsweitenmodulationssignale verwendet. Durch die Verwendung eines PWM-Manipulators kann ein empfangenes Pulsweitenmodulationssignal geändert und in geänderter Form weitergeleitet werden. Insbesondere wird die Angabe des verfügbaren Ladestroms entsprechend geändert.

Die Realisierung ist in diesem Fall technisch vergleichsweise einfach und kosteneffizient durchführbar.

In einer bevorzugten Ausgestaltung umfasst der vordefinierte Anpassungsparameter einen Maximalwert für den Ladestrom. Zusätzlich oder alternativ umfasst der vordefinierte Anpassungsparameter ein Zeitprofil mit einer Zuordnung von Maximalwerten für den Ladestrom zu Uhrzeiten und ist die Anpassungseinheit zum Ermitteln des angepassten Ladestroms basierend auf dem Zeitprofil und einer aktuellen Uhrzeit ausgebildet. Weiterhin zusätzlich oder alternativ umfasst der vordefinierte Anpassungsparameter ein Spannungsprofil mit einer Zuordnung von Maximalwerten für den Ladestrom zu Netzspannungen und ist die Anpassungseinheit zum Ermitteln des angepassten Ladestroms basierend auf dem Spannungsprofil und einer aktuellen Netzspannung ausgebildet. Es bestehen mehrere Möglichkeiten für die Begrenzung und Freigabe des maximalen Ladestroms. Einerseits ist es möglich, eine dauerhafte Begrenzung des Ladestroms durch die Verwendung eines Maximalwerts umzusetzen. Zusätzlich oder alternativ kann ein Zeitprofil verwendet werden. Hierzu wird von einer Uhrzeiteinheit eine Uhrzeit empfangen und dann anhand eines Zeitprofils ein zugehöriger aktueller Maximalwert ermittelt. Beispielsweise kann in bestimmten Zeiträumen ein höherer Ladestrom zur Verfügung gestellt werden oder der Ladestrom in bestimmten Zeiträumen verringert werden. Eine Uhrzeit ist hierbei sowohl als Tageszeit als auch als Datumsangabe zu verstehen. Insoweit ist es möglich auf wochentags- bzw. tageszeitabhängige Verfügbarkeiten im Stromnetz zu reagieren. Es kann ausgenutzt werden, dass zu gewissen Zeiten üblicherweise mehr Strom verfügbar ist und ein Ladevorgang mit hohem Ladestrom für die Netzstabilität unschädlich ist. Durch die Verwendung eines Spannungsprofils wird der Ladestrom von einer aktuellen bzw. vorliegenden Netzspannung abhängig gemacht. Hierzu wird die Netzspannung durch ein entsprechendes Messgerät gemessen und anhand des Spannungsprofils ein der gemessenen Netzspannung zugeordneter Maximalwert ermittelt. Es ergibt sich insoweit eine Regelung der maximalen Ladeleistung in Abhängigkeit der jeweils anliegenden Netzversorgungsspannung. Es kann unmittelbar dynamisch auf Leistungsspitzen reagiert werden, um so die Netzbelastung gering zu halten.

In einer bevorzugten Ausgestaltung ist die Anpassungseinheit zum Ermitteln des angepassten verfügbaren Ladestroms basierend auf dem verfügbaren Ladestrom ausgebildet. Der angepasste verfügbare Ladestrom ist dabei vorzugsweise geringer als der verfügbare Ladestrom. Beispielsweise ist es möglich, dass ein Anteil des ursprünglich verfügbaren Ladestroms als angepasster verfügbarer Ladestrom weitergegeben wird. Gegenüber dem Normalbetrieb wird der Ladestrom also reduziert und die Netzbelastung verringert. Es ergibt sich eine höhere Netzstabilität bzw. eine geringere Fehleranfälligkeit.

In einer bevorzugten Ausgestaltung ist die Fahrzeugschnittstelle zum Empfangen eines zweiten Kommunikationssignals von dem Elektrofahrzeug ausgebildet. Die Ladeeinrichtungsschnittstelle ist zum Übermitteln des zweiten Kommunikationssignals an die Ladeeinrichtung ausgebildet. Es ist insoweit möglich, dass ein Rückkanal von dem Elektrofahrzeug zur Ladeeinrichtung ebenfalls über die erfindungsgemäße Vorrichtung weitergeleitet wird. Vorzugsweise wird das über diesen Rückkanal übermittelte zweite Kommunikationssignal dabei unverändert weitergeleitet. Das Elektrofahrzeug kann in gewohnter Weise mit der Ladeeinrichtung kommunizieren und bidirektional Daten austauschen. Die erfindungsgemäße Vorrichtung ist in der Kommunikation zwischen Elektrofahrzeug und Ladeeinrichtung zwischengeschaltet.

In einer bevorzugten Ausgestaltung umfasst das empfangene Kommunikationssignal eine Statusangabe. Die Modifikationseinheit ist dazu ausgebildet, das modifizierte Kommunikationssignal mit einer identischen Statusangabe zu erzeugen. Die Statusangabe wird also unverändert weitergegeben. Die Kommunikation zwischen Elektrofahrzeug und Ladeeinrichtung wird nur im Hinblick auf die Angabe des verfügbaren Ladestroms angepasst bzw. geändert. Hierdurch können Sicherheitsfunktionen und andere Funktionalitäten weiterhin in gewohnter Weise realisiert bleiben. Eine Anpassung des Elektrofahrzeugs oder der Ladeeinrichtung ist nicht notwendig, sodass eine effiziente nachträgliche Installation möglich ist.

In einer bevorzugten Ausgestaltung umfasst die Vorrichtung eine Steuerschnittstelle zum Empfangen einer Steuerungsinformation von einer Steuerungsstelle. Dabei ist die Anpassungseinheit zum Anpassen des vordefinierten Anpassungsparameters basierend auf der Steuerungsinformation ausgebildet. Die Steuerschnittstelle ist vorzugsweise zum drahtlosen Kommunizieren, zum Kommunizieren mit einer Netzleitwarte eines Netzbetreibers, zum Kommunizieren mit einem Heimsteuersystem eines Betreibers der Ladeeinrichtung und/oder zum Kommunizieren mit einem intelligenten Messsystem eines Messstellenbetreibers und zugehörigen Smart Meter Gateways zur Fernauslesung ausgebildet. Über die Steuerschnittstelle kann eine Anpassung des vordefinierten Anpassungsparameters mit einer Steuerungsinformation vorgenommen werden, die von einer Netzleitwarte eines Netzbetreibers oder von einem Heimsteuersystem eines Betreibers der Ladeeinrichtung empfangen wird. Ebenfalls ist es möglich, dass als Steuerinformation ein Signal eines Smart Meters per Fernauslesung empfangen wird. Durch die Verwendung der Steuerungsinformation kann eine Anpassung an aktuelle Gegebenheiten erfolgen. Es ergibt sich eine flexible Einsetzbarkeit sowie eine Möglichkeit, flexibel auf geänderte Anforderungen zu reagieren. Ausfälle im Netz können minimiert werden.

In einer bevorzugten Ausgestaltung umfasst die Vorrichtung eine Benutzerschnittstelle zum Empfangen einer Anpassungsinformation von einem Benutzer. Die Anpassungseinheit ist zum Anpassen des vordefinierten Anpassungsparameters basierend auf der Anpassungsinformation ausgebildet. Zusätzlich ist es möglich, dass eine Benutzereingabe verwendet werden kann, um eine weitere Anpassung vorzunehmen. Hierdurch kann beispielsweise entsprechend geschultes Personal des Netzbetreibers einen manuellen Eingriff vornehmen. Insbesondere ist die Benutzerschnittstelle dabei als direkt an der Vorrichtung zugängliche Schnittstelle ausgebildet, die einem Benutzer vor Ort eine Anpassung ermöglicht.

In einer bevorzugten Ausgestaltung ist die Fahrzeugschnittstelle als Ladestecker, vorzugsweise als Typ-2-Ladestecker, ausgebildet. Zusätzlich oder alternativ sind die Ladeeinrichtungsschnittstelle und die Fahrzeugschnittstelle zum Übertragen des Kommunikationssignals in Form eines PP-Signals oder eines CP-Signals ausgebildet. Es werden ein PP-Signal oder ein CP-Signal über einen Typ-2-Ladestecker transportiert. Der Typ-2-Ladestecker ist dabei der zum aktuellen Zeitpunkt am weitesten verbreitete Ladestecker für Elektroautos. Insbesondere wird der Typ-2-Ladestecker für das Wechselstromladen verwendet. Es ergibt sich eine hohe Kompatibilität mit aktuell verfügbaren Elektrofahrzeugen und Ladeeinrichtungen.

In einer bevorzugten Ausgestaltung ist die Ladeeinrichtungsschnittstelle zum Empfangen eines Ladestroms von der Ladeeinrichtung ausgebildet und die Fahrzeugschnittstelle zum Weiterleiten des Ladestroms an das Elektrofahrzeug ausgebildet. Zusätzlich oder alternativ ist die Vorrichtung in ein Ladekabel, insbesondere ein Typ-2-Ladekabel, integriert oder als Adapter zum Einstecken in eine standardisierte Steckerbuchse, insbesondere eine Typ-2-Steckerbuchse, ausgebildet. Insbesondere ist eine integrierte Ausführung möglich, bei der einerseits der Ladestrom selbst über die Vorrichtung weitergeleitet wird und andererseits das Kommunikationssignal entsprechend angepasst wird. Durch die Integration in ein Ladekabel oder in einen Ladestecker ergibt sich eine effiziente Nachrüstbarkeit und einfache Installierbarkeit. Zudem werden mögliche Fehler bei der Installation weitestgehend ausgeschlossen, sodass eine sichere Anwendung möglich ist.

In einer bevorzugten Ausgestaltung umfasst die Vorrichtung eine Asymmetrie-Überwachungseinheit zum Begrenzen des Ladestroms auf einen vordefinierten Maximalwert. Durch die zusätzliche Verwendung einer Asymmetrie-Überwachungseinheit kann sichergestellt werden, dass Fahrzeuge, die einen in einem bestimmten Bereich zulässigen maximalen Ladestrom überschreiten, ebenfalls mittels der Ladeeinrichtung geladen werden können. Beispielsweise können in einzelnen Regionen Grenzwerte für den Ladestrom und für Asymmetrien im Ladestrom gelten bzw. vorgegeben sein. Fahrzeuge aus anderen Regionen mit anderen Vorgaben können diesen zulässigen Ladestrom jedoch überschreiten. Durch die Verwendung einer Asymmetrie-Überwachungseinheit kann eine Lastflussüberwachung realisiert werden. Ein unzulässig hoher Ladestrom kann erkannt werden und entsprechend begrenzt werden. Der Grenzwert wird eingehalten.

Unter einer Batterie eines Elektrofahrzeugs wird eine wiederaufladbare Batterie verstanden. Der Begriff Elektrofahrzeug umfasst alle Arten von Fahrzeugen und schließt neben rein elektrisch betriebenen Fahrzeugen insbesondere auch Hybridfahrzeuge (Plug-In Hybride) mit ein. Ein Kommunikationssignal kann ein digitales oder ein analoges Signal sein. Insbesondere ist unter einem Kommunikationssignal ein Datenpaket bzw. eine übermittelte Information zu verstehen. Eine Angabe innerhalb des Kommunikationssignals entspricht einer Spezifikation eines Werts gemäß einem vordefinierten und vorbekannten Protokoll. Die Angabe des verfügbaren Ladestroms bzw. des angepassten verfügbaren Ladestroms kann sich auf eine Absolut- oder Relativskala beziehen und in analoger oder digitaler Weise übermittelt werden. Ein Anpassungsparameter kann eine Funktion oder auch ein Wert bzw. ein Vektor sein. Die Angabe des Anpassungsparameters kann auf einer Absolut- oder Relativskala vorliegen. Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine schematische Darstellung eines erfindungsgemäßen Systems zum Anpassen einer Ladeleistung beim Laden einer Batterie eines Elektrofahrzeugs;
- Fig. 2: eine schematische Darstellung einer erfindungsgemäßen Vorrichtung;
- Fig. 3: eine schematische Darstellung eines PWM-Signals;
- Fig. 4: eine schematische Darstellung einer Kommunikation zwischen Ladeeinrichtung und Elektrofahrzeug in bisherigen Systemen;
- Fig. 5: eine schematische Darstellung der ausgetauschten Nachrichten in der Kommunikation der Figur 4;
- Fig. 6: eine schematische Darstellung einer erfindungsgemäßen Kommunikation zwischen Ladeeinrichtung und Elektrofahrzeug mit zwischengeschalteter Vorrichtung;
- Fig. 7: eine schematische Darstellung der ausgetauschten Nachrichten in der Kommunikation der Figur 6;
- Fig. 8: eine schematische Darstellung der Kommunikation zwischen erfindungsgemäßer Vorrichtung und Elektrofahrzeug;
- Fig. 9: eine weitere schematische Darstellung der Kommunikation zwischen einer erfindungsgemäßen Vorrichtung, einer Ladeeinrichtung und einem Elektrofahrzeug;
- Fig. 10: eine schematische Darstellung einer weiteren Ausführungsform der erfindungsgemäßen Vorrichtung; und
- Fig. 11: eine schematische Darstellung eines erfindungsgemäßen Verfahrens.

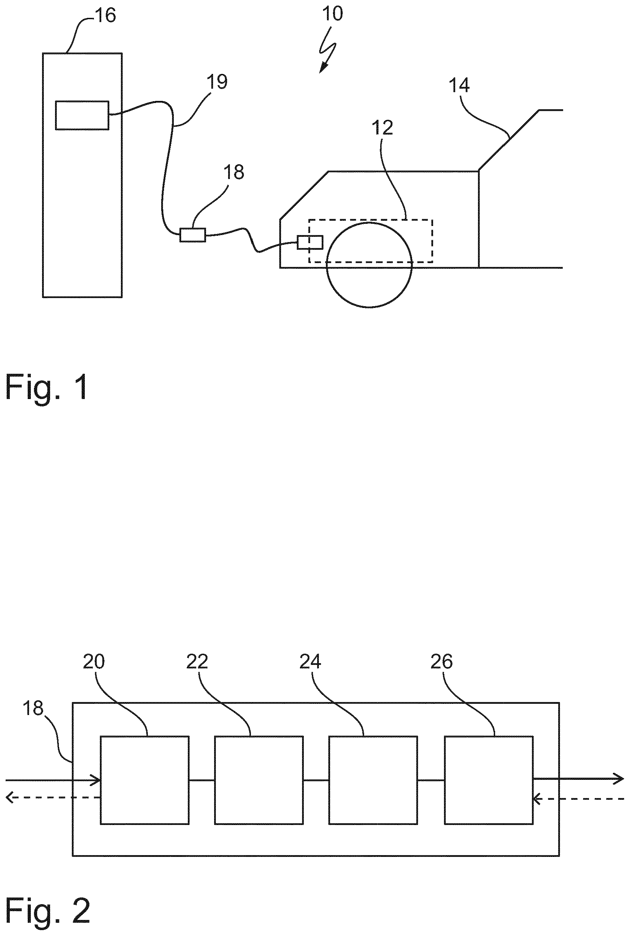

In der Fig. 1 ist schematisch ein erfindungsgemäßes System 10 zum Anpassen einer Ladeleistung beim Laden einer Batterie 12 eines Elektrofahrzeugs 14 dargestellt. Das System 10 umfasst neben dem Elektrofahrzeug 14 mit seiner Batterie 12 eine Ladeeinrichtung 16 sowie eine Vorrichtung 18 zum Anpassen der Ladeleistung. Im dargestellten Ausführungsbeispiel ist das Elektrofahrzeug 14 ein batteriebetriebener PKW. Die Ladeeinrichtung 16 ist eine Wallbox. Es versteht sich, dass es sich bei der Ladeeinrichtung 16 auch um ein anderes Gerät handeln kann und dass auch ein anderes Elektrofahrzeug Teil des Systems 10 sein kann.

Über die Ladeeinrichtung 16 wird mittels eines Ladekabels 19 ein Ladestrom an die Batterie 12 des Elektrofahrzeugs 14 weitergegeben. Im dargestellten Ausführungsbeispiel ist die Vorrichtung 18 in das Ladekabel 19 integriert. Die Vorrichtung 18 greift in die Datenkommunikation zwischen der Ladeeinrichtung 16 und dem Elektrofahrzeug 14 ein und manipuliert diese. Ziel der Manipulation ist es, die maximale Ladeleistung der Ladeeinrichtung 16, die an das Elektrofahrzeug 14 transferiert wird, je nach Bedarf zu begrenzen bzw. freizugeben.

Im dargestellten Ausführungsbeispiel handelt es sich bei der bereitgestellten Ladespannung der Ladeeinrichtung 16 um eine Wechselspannung (Wechselstromladen). Das Ladekabel 19 kann insbesondere ein Typ-2-Ladekabel sein, das mittels eines Typ-2-Steckers mit einer entsprechenden Steckvorrichtung an der Ladereinrichtung 16 und/oder am Elektrofahrzeug 14 angebunden ist. Besonders vorteilhaft ist erfindungsgemäß ein Ladekabel mit integrierte Vorrichtung 18 vorgesehen, das beidseitig einen Typ-2-Stecker aufweist.

In der Fig. 2 ist schematisch eine erfindungsgemäße Vorrichtung 18 dargestellt. Die Vorrichtung 18 umfasst eine Ladeeinrichtungsschnittstelle 20, eine Anpassungseinheit 22, eine Modifikationseinheit 24 sowie eine Fahrzeugschnittstelle 26. Die verschiedenen Einheiten können einzeln oder kombiniert in Hard- und/oder in Software implementiert sein.

Über die Ladeeinrichtungsschnittstelle 20 wird ein Kommunikationssignal von der Ladeeinrichtung empfangen. Dieses Kommunikationssignal umfasst eine Angabe eines verfügbaren Ladestroms. In der Anpassungseinheit 22 wird basierend auf einem vordefinierten Anpassungsparameter ein angepasster verfügbarer Ladestrom ermittelt. Dieser angepasste verfügbare Ladestrom ist insbesondere geringer als der verfügbare Ladestrom. In der Modifikationseinheit 24 wird ein modifiziertes Kommunikationssignal erzeugt, das auf dem empfangenen Kommunikationssignal basiert und eine Angabe des angepassten verfügbaren Ladestroms umfasst. Dieses modifizierte Kommunikationssignal wird an das Elektrofahrzeug übermittelt. Zudem kann die Vorrichtung 18 vorzugsweise auch Kommunikationssignale des Elektrofahrzeugs empfangen und verarbeiten sowie Kommunikationssignale an die Ladeeinrichtung übermitteln (bidirektionale Kommunikation), wie durch die gestrichelten Pfeile angedeutet. Das Kommunikationssignal kann insbesondere ein Pulsweitenmodulationssignal (PWM-Signal) sein. Die Modifikationseinheit kann insbesondere einen PWM-Manipulator umfassen.

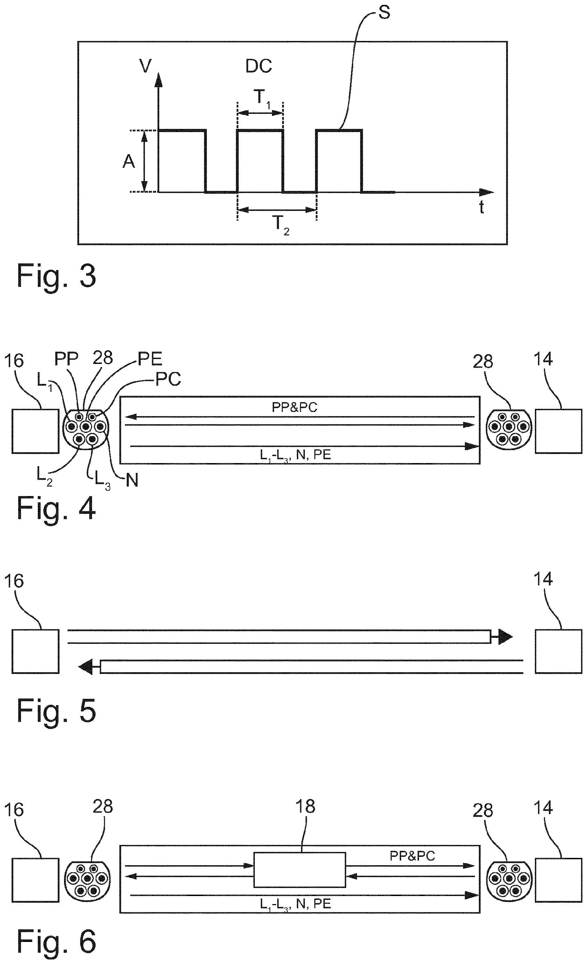

In der Fig. 3 ist schematisch die PWM-Datenkommunikation mittels eines beispielhaften PWM-Signals dargestellt. Insbesondere ist der Spannungsverlauf eines PWM-Signals S über die Zeit t dargestellt. Um Informationen zu übermitteln, wird einerseits die Amplitude A des PWM-Signals S und andererseits der Duty Cycle DC des PWM-Signals S, der sich aus dem Verhältnis zwischen einer ersten Zeitspanne T1 und einer zweiten Zeitspanne T2 ergibt, modifiziert. Die Kodierung einer Information in einem PWM-Signal kann standardisiert oder in anderer Weise festgelegt sein.

In der Fig. 4 ist schematisch die Verbindung zwischen einer Ladeeinrichtung 16 und einem Elektrofahrzeug 14 über ein Ladekabel 19 dargestellt. Das Ladekabel 19 ist über entsprechende Ladestecker 28 beidseitig an die Ladeeinrichtung 16 bzw. das Elektrofahrzeug 14 angebunden. Insbesondere wird ein Typ-2-Ladekabel verwendet. Über das Ladekabel 19 wird eine bidirektionale PWM-Datenübertragung zwischen der Ladeeinrichtung 16 und dem Elektrofahrzeug 14 durchgeführt. Hierzu werden insbesondere die Proximity-Pilot-Signale (PP-Signale) sowie die Control-Pilot-Signale (CP-Signale) und die entsprechenden Pins des Typ-2-Steckers verwendet. Im dargestellten Beispiel sind die Ladestecker 28 als Typ-2-Stecker ausgebildet. Neben der bidirektionalen Kommunikation ist eine Leistungsübertragung über eine bis drei Phasen sowie einen Neutralleiter und einen Schutzleiter vorgesehen (L1 - L3, N, PE).

In der Fig. 5 ist schematisch der grundsätzliche Ablauf der Kommunikation vor Einleitung eines Ladevorgangs dargestellt. Zunächst hat die Ladeeinrichtung 16 dabei einen Initialzustand, bei dem kein Elektrofahrzeug mit der Ladeeinrichtung verbunden ist. Sobald ein Elektrofahrzeug an die Ladeeinrichtung angesteckt wird, erkennt die Ladeeinrichtung dies und wechselt in einen Zustand, in dem zwar eine Verbindung besteht, der Ladevorgang jedoch noch nicht freigegeben ist. Dann wird von der Ladeeinrichtung 16 in einem ersten Kommunikationsschritt eine Anfrage an das Elektrofahrzeug 14 übermittelt, um die Kommunikation herzustellen. Insbesondere wird geklärt, ob eine standardgemäße Kommunikation über ein PWM-Signal bzw. gemäß dem ISO 15118-Standard durchgeführt werden kann.

Sofern eine entsprechende Kommunikation möglich ist, wird von der Ladeeinrichtung 16 über die PWM-Kommunikation ein maximal zulässiger Ladestrom an das Elektrofahrzeug 14 übermittelt. Dieser grundsätzlich maximal zulässige Ladestrom beruht auf der baulich installierten Leistung der Ladeeinrichtung und ist fest in der Ladeeinrichtung parametriert. Diese Information wird über das PP-Signal einmalig beim Anstecken eines Elektrofahrzeugs übermittelt. Weiterhin wird in einem zweiten, gegebenenfalls regelmäßig ausgeführten Kommunikationsschritt der aktuell maximal zulässige Ladestrom an der Ladeeinrichtung 16 an das Elektrofahrzeug 14 übermittelt. Diese zweite Information über den aktuell maximal zulässigen Ladestrom wird dabei über das CP-Signal übermittelt und kann auch zu jedem beliebigen Zeitpunkt während eines laufenden Ladevorgangs erneut von der Ladeeinrichtung 16 an das Elektrofahrzeug 14 geschickt werden. Auf diese Weise kann während eines Ladevorgangs die maximale Ladeleistung des Elektrofahrzeugs begrenzt und erhöht werden.

Erst nach Erhalt der Information der Ladeeinrichtung 16 wird an der Ladeeinrichtung die Spannungsversorgung des Elektrofahrzeugs 14 freigeschaltet und das Elektrofahrzeug 14 startet den Ladevorgang unter Berücksichtigung der aktuellen Ladestromgrenze. Über dieselbe (bidirektionale) PWM-Kommunikation können zudem Status- und Fehlermeldungen zwischen Ladeeinrichtung 16 und Elektrofahrzeug 14 in einer bidirektionalen Kommunikation ausgetauscht werden.

In der Fig. 6 ist der erfindungsgemäße Ansatz des Anpassens der Ladeleistung beim Laden einer Batterie eines Elektrofahrzeugs dargestellt. Die erfindungsgemäße Vorrichtung 18 ist dabei im Vergleich zu Fig. 4 in der Kommunikation zwischen Ladeeinrichtung 16 und Elektrofahrzeug 14 zwischengeschaltet. Die Leistungsübertragung (L1 - L3, N, PE) bleibt unberührt. Das zuerst übermittelte PWM-Signal der Ladeeinrichtung 16 wird von der erfindungsgemäßen Vorrichtung 18 abgefangen. Die Antwort auf die Anfrage, ob ein PWM-SignalAustausch erfolgen kann, erfolgt durch die erfindungsgemäße Vorrichtung 18. Bei der nun folgenden Festlegung des maximal zulässigen Ladestroms wird das entsprechende PWM-Signal (Kommunikationssignal) von der erfindungsgemäßen Vorrichtung 18 abgefangen, modifiziert bzw. angepasst und erst dann an das Elektrofahrzeug 14 weitergeleitet. Das Kommunikationssignal entspricht einem PP-Signal oder einem CP-Signal über die entsprechenden Pins des Ladekabels. Weitere Signale, mit denen Status- und Fehlermeldungen ausgetauscht werden, werden von der erfindungsgemäßen Vorrichtung 18 unverändert weitergeleitet. Hierdurch wird sichergestellt, dass sonstige Funktionen und Abstimmungen erhalten bleiben.

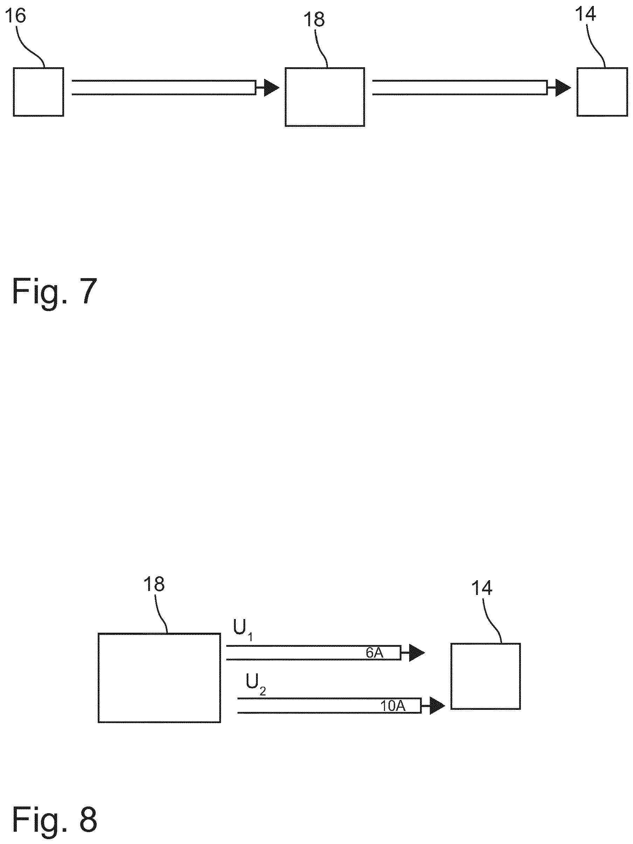

In der Fig. 7 ist der Ablauf der Kommunikation dargestellt, wenn lediglich eine einzelne Nachricht von der Ladeeinrichtung 16 an die erfindungsgemäße Vorrichtung 18 übermittelt wird und lediglich eine einzelne Nachricht von der Vorrichtung 18 an das Elektrofahrzeug 14 weitergeleitet wird. Durch eine einzelne Nachricht bzw. eine Übermittlung eines modifizierten Kommunikationssignals mit einer Angabe eines angepassten verfügbaren Ladestroms kann eine grundsätzliche Limitierung an das Elektrofahrzeug 14 vorgegeben werden.

In der Fig. 8 ist ein weiteres Beispiel für einen Betrieb der erfindungsgemäßen Vorrichtung 18 dargestellt. Es werden laufend mehrere PWM-Signale zu aufeinanderfolgenden Zeitpunkten übermittelt, um eine Steuerung umzusetzen. Hierbei ist es insbesondere vorteilhaft, wenn in der erfindungsgemäßen Vorrichtung 18 ein Anpassungsparameter mit einem Zeitprofil hinterlegt ist, in dem eine Zuordnung von Maximalwerten für den Ladestrom zu Uhrzeiten vorgegeben ist, und auf eine Uhrzeit zugegriffen werden kann. Zu unterschiedlichen Uhrzeiten werden also entsprechende PWM-Signale generiert, die im Elektrofahrzeug eine entsprechende Begrenzung des Ladestroms bewirken. Im dargestellten Beispiel in der Fig. 8 wird zu einer ersten Uhrzeit U1 eine erste Begrenzung auf einen Strom von 6 Ampere vorgenommen, zu einer zweiten Uhrzeit U2 wird eine Begrenzung auf einen verfügbaren Ladestrom von 10 Ampere vorgenommen.

Analog ist es ebenfalls möglich, dass anstelle eines Zeitprofils ein Anpassungsparameter mit einem Spannungsprofil verwendet wird. Die Zuordnung von Maximalwerten für den Ladestrom ist dabei zu verschiedenen Netzspannungen vorgegeben. Die Netzspannung kann mittels einer entsprechenden Messeinrichtung gemessen werden. Je nach gemessener Netzspannung wird basierend auf einem hinterlegten Spannungsprofil eine Anpassung vorgenommen. Sobald sich die Netzspannung ändert, beispielsweise einen Grenzwert unterschreitet, wird eine neue Regulierung des verfügbaren Ladestroms vorgenommen. Hierdurch ergibt sich die Möglichkeit, auf Änderungen der Netzspannung zu reagieren, um Überlasten zu vermeiden.

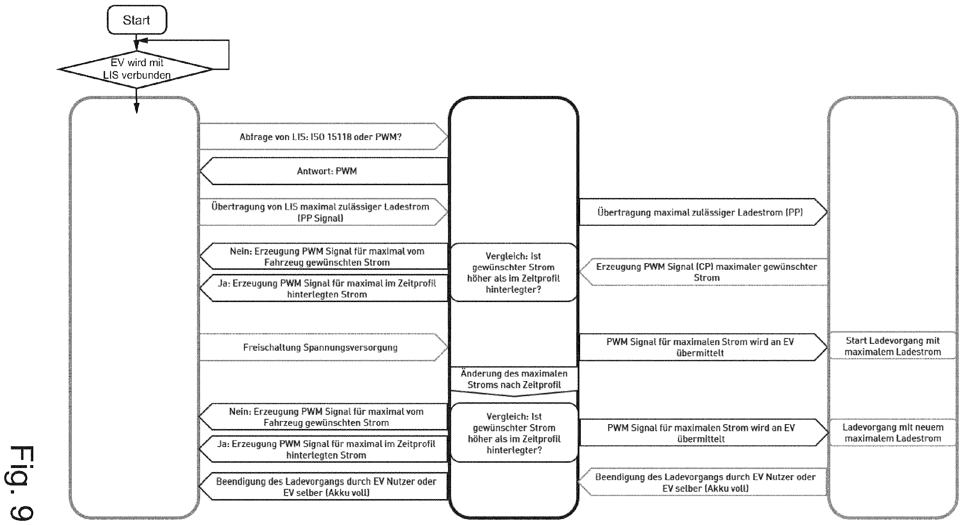

In der Fig. 9 ist ein möglicher Ablauf der Kommunikation bzw. das Kommunikationsprotokoll zwischen Elektrofahrzeug 14, Vorrichtung 18 und Ladeeinrichtung 16 zusammengefasst, wenn als vordefinierter Anpassungsparameter ein Zeitprofil verwendet wird

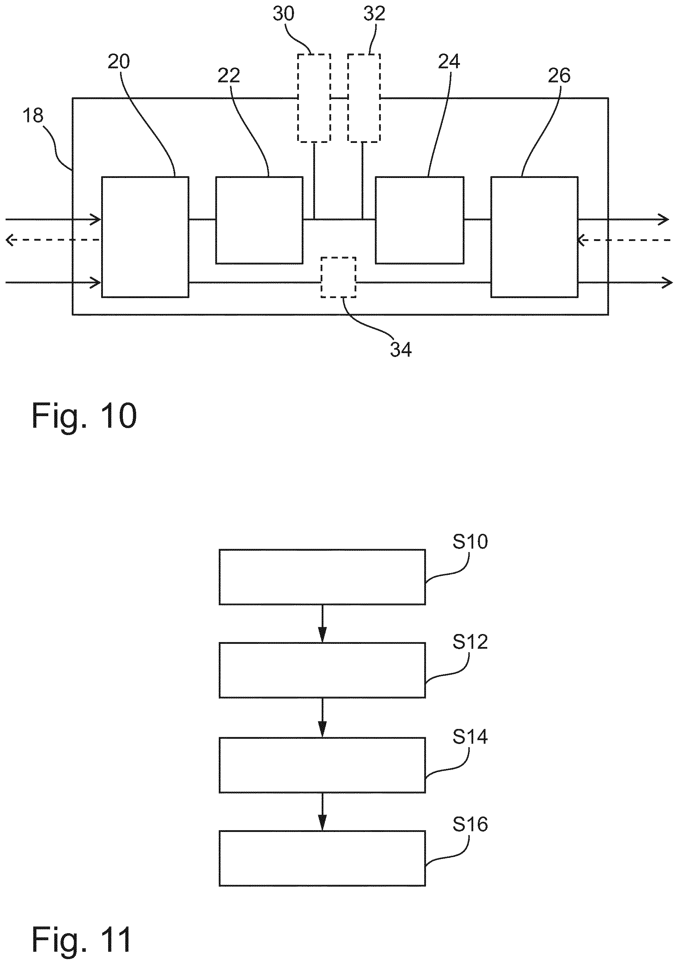

In der Fig. 10 ist schematisch eine erfindungsgemäße Vorrichtung mit verschiedenen optionalen Erweiterungen (gestrichelte Linien) dargestellt.

Die Vorrichtung 18 kann eine Steuerschnittstelle 30 umfassen, über die eine Steuerungsinformation von einer Steuerungsstelle empfangen wird. Eine Steuerungsstelle kann dabei beispielsweise eine Netzleitwarte eines Netzbetreibers oder auch ein Heimsteuersystem eines Betreibers der Ladeeinrichtung sein. Insbesondere kann die Steuerschnittstelle zum drahtlosen kommunizieren ausgebildet sein. Beispielsweise kann die Steuerschnittstelle eine Bluetooth-, WLAN- oder Mobilfunk-Schnittstelle sein, mit der direkt oder auch indirekt über das Internet mit der Netzleitwarte bzw. mit dem Heimsteuersystem kommuniziert werden kann. Es versteht sich, dass auch eine drahtgebundene Kommunikation vorgesehen sein kann.

Über die Steuerschnittstelle 30 wird eine Steuerungsinformation empfangen, die dann dazu dient, den vordefinierten Anpassungsparameter in der Anpassungseinheit 22 anzupassen. Beispielsweise kann der vordefinierte Anpassungsparameter durch einen anderen Wert ersetzt werden. Es kann beispielsweise ein Maximalwert bzw. ein Zeit- oder Spannungsprofil geändert und/oder an andere Gegebenheiten angepasst wird. Die empfangene Steuerungsinformation kann dabei insbesondere im selben Format wie der vordefinierte Anpassungsparameter vorliegen.

Durch die Kommunikation mit einer Netzleitwarte (Backend-System) kann der Netzbetreiber über die Steuerungsinformation Einfluss auf den Ladestrom ausüben. Hierdurch kann der Netzbetreiber beispielsweise für eine stabile Stromversorgung sorgen.

Unter einem Heimsteuersystem eines Betreibers ist insbesondere ein Homemanagementsystem oder auch ein Energiemanagementsystem wie beispielsweise EnBW EnergyBASE, Amazon Alexa, VW/BMW Smart Home etc. zu verstehen. Derartige Systeme erlauben es, eine Ladestation ferngewirkt zu überwachen und zu steuern. Insbesondere können Parameter wie Stromfluss, Spannung, Ladeleistung etc. überwacht werden. Mögliche Anwendungen schließen dann eine Energiemengenerfassung und -bilanzierung mit ein. Ebenfalls können Ladevorgänge geschaltet werden, um zeitvariable Strompreise auszunutzen oder selbsterzeugten Photovoltaikstrom zu verbrauchen. Zudem kann ein Diebstahlschutz realisiert werden. Das Grundprinzip ähnelt dabei einem Adapter für Steckdosen, wie diese bereits bei Smart Home-Anwendungen eingesetzt werden.

Weiterhin kann die erfindungsgemäße Vorrichtung eine Benutzerschnittstelle 32 umfassen, die dazu dient, von einem Benutzer direkt eine Anpassungsinformation zu empfangen. Die Benutzerschnittstelle kann als drahtlose Schnittstelle, beispielsweise als Bluetooth-Schnittstelle oder auch als drahtgebundene Schnittstelle, beispielsweise als USB-Schnittstelle ausgebildet sein. Der Benutzer kann insbesondere einen Computer an die Benutzerschnittstelle anschließen. Ebenfalls ist es möglich, dass die Benutzerschnittstelle direkt ein entsprechendes Interface, beispielsweise in Form eines Touchscreens umfasst.

Mit der Anpassungsinformation kann der vordefinierte Anpassungsparameter in der Anpassungseinheit 22 analog zu der zuvor beschriebenen Anpassung basierend auf der Steuerinformation angepasst werden. Durch die Benutzerschnittstelle 32 ist es einem Benutzer direkt vor Ort möglich, eine entsprechende Änderung oder Neudefinition des vordefinierten Anpassungsparameters vorzunehmen. Beispielsweise kann ein Techniker eines Netzbetreibers vor Ort Modifikationen vornehmen.

Zudem ist es möglich, dass die erfindungsgemäße Vorrichtung eine Asymmetrie-Überwachungseinheit 34 umfasst. Wenn die erfindungsgemäße Vorrichtung 18 in ein Ladekabel integriert ist und über die Ladeeinrichtungsschnittstelle 20 bzw. die Fahrzeugschnittstelle 26 auch der Ladestrom an sich weitergeleitet wird, kann es vorteilhaft sein, eine zusätzliche Asymmetrie-Überwachungseinheit 34 zu verwenden. Durch eine solche Asymmetrie-Überwachungseinheit 34 kann eine Einhaltung eines Grenzwerts für den Stromfluss sichergestellt werden. In Deutschland gilt beispielsweise ein Grenzwert von 20 Ampere für eine ein- und zweiphasige Elektrofahrzeugladung bzw. eine maximale Schieflast von 4,6 kVA Ladeleistung. Viele Fahrzeuge, insbesondere aus dem asiatischen Raum, überschreiten diesen zulässigen Ladestrom. Durch die Verwendung einer Asymmetrie-Überwachungseinheit kann insoweit eine Art Lastflussüberwachung bzw. eine Überwachung einer Ungleichheit (Asymmetrie) im Lastfluss realisiert werden. Die Ladeleistung wird dann auf den vorgeschriebenen Maximalwert begrenzt. Die Asymmetrie-Überwachungseinheit 34 kann dabei insbesondere die entsprechenden Schaltelemente für die beim Laden eines Elektrofahrzeugs verwendeten Leistungen umfassen.

In der Fig. 11 ist schematisch ein erfindungsgemäßes Verfahren zum Anpassen einer Ladeleistung beim Laden einer Batterie eines Elektrofahrzeugs dargestellt. Das Verfahren umfasst Schritte des Empfangens S10 eines Ladestroms, des Ermittelns S12 eines angepassten verfügbaren Ladestroms, des Erzeugens S14 eines modifizierten Kommunikationssignals und des Weiterleitens S16 des modifizierten Kommunikationssignals. Das Verfahren kann insbesondere als Steuerungssoftware für eine entsprechende Vorrichtung, die beispielsweise in ein Ladekabel oder in einen Ladestecker integriert sein kann, ausgebildet sein.

Insbesondere ermöglicht der erfindungsgemäße Ansatz die folgenden verschiedenen konkreten Anwendungen:
Zunächst kann eine temporäre netzdienliche Steuerung von neu zu errichtenden Ladeeinrichtungen erfolgen, um hierdurch einen schnellen Netzanschluss bei nicht ausreichender Netzkapazität zu ermöglichen. Wenn beispielsweise ein Netzkunde eine neue private Ladeeinrichtung beim Netzbetreiber zum Anschluss an das Stromnetz anmeldet, prüft der Netzbetreiber zunächst die Netzverträglichkeit. Wenn diese Netzverträglichkeitsprüfung ergibt, dass die derzeitige freie Leistung des Stromnetzes nicht für die zusätzliche Leistung ausreicht, müsste der Kunde mit dem Anschluss seiner Ladeeinrichtung bis zur Fertigstellung einer Netzverstärkungsmaßnahme warten. Stattdessen kann vereinbart werden, dass der Kunde sofort einen Netzanschluss für seine Ladeeinrichtung erhält, wenn er die maximale Leistung seiner Ladeeinrichtung mittels einer erfindungsgemäßen Vorrichtung bis zum Abschluss der Netzausbaumaßnahme begrenzt.

Ein weiteres Anwendungsszenario liegt in einer temporären Leistungsbegrenzung von Ladeeinrichtungen zur Reduktion der Netzbelastung bei akutem Netzengpass. Unter Umständen kann es passieren, dass durch einen unkoordinierten Zubau und zeitgleichen Betrieb von Ladeeinrichtungen in einem abgegrenzten Abschnitt des Stromnetzes die Leistungskapazität des Stromnetzes überschritten wird. In diesem Fall kann es zu lokalen Stromausfällen aufgrund von Betriebsmittelüberlastungen oder Auslösen von Netzschutzeinrichtungen kommen. Zur Wiederherstellung eines sicheren Netzbetriebs könnte durch den erfindungsgemäßen Ansatz die maximale Ladeleistung von Ladeeinrichtungen in diesem Netzabschnitt begrenzt werden, bis anderweitig Abhilfe geschaffen werden kann (beispielsweise durch einen Netzausbau).

Eine weitere Anwendung liegt in einer dauerhaften netzdienlichen Steuerung von Ladeeinrichtungen gemäß gesetzlichen oder normativen Vorgaben sowie vertraglichen Vereinbarungen zwischen Energielieferanten und Kunden (z. B. EnWG - Energiewirtschaftsgesetz §14a). Es ist möglich, dass gesetzliche Vorgaben dahingehend bestehen, dass einem Netzbetreiber steuerbare Verbrauchseinheiten gemeldet werden können. Der Kunde kann dann gegebenenfalls vergünstigte Netznutzungsentgelte für sein Verbrauchgerät erhalten. Die Voraussetzung hierfür ist, dass der Kunde die maximale Leistung seiner Ladeeinrichtung durch den Netzbetreiber im Bedarfsfall begrenzen lässt. Analog werden beispielsweise Nachtspeicherheizungen mit Wärmepumpen betrieben.

In einem weiteren Anwendungsszenario kann eine zeitliche Verschiebung der Betriebszeiten einer Ladeeinrichtung zur Optimierung der Energiebeschaffung realisiert werden. Betreiber von Ladeeinrichtungen haben häufig Interesse daran, die Betriebszeiten ihrer Ladeeinrichtung zeitlich zu verschieben, um ihre Energiebeschaffung zu optimieren. Anreize hierfür können beispielsweise die Nutzung von Hoch- oder Niedertarifen im Strompreis oder von selbsterzeugtem Photovoltaikstrom sein.

Ein weiteres Anwendungsszenario liegt in der ferngesteuerten Leistungsbegrenzung. Durch eine kommunikative Anbindung der erfindungsgemäßen Vorrichtung (beispielsweise über WLAN, Bluetooth, GSM etc.) an externe Geräte (z. B. eine Netzleitwarte des Netzbetreibers, ein kundeneigenes Homemanagementsystem etc.) ist auch das Empfangen von Sollwerten bzw. Fahrplänen möglich. Diese könnten dann von der erfindungsgemäßen Vorrichtung an das Elektrofahrzeug übermittelt werden.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

## Patentansprüche

1. Vorrichtung (18) zum Anpassen einer Ladeleistung beim Laden einer Batterie (12) eines Elektrofahrzeugs (14), mit:
einer Ladeeinrichtungsschnittstelle (20) zum Empfangen eines Kommunikationssignals von einer Ladeeinrichtung (16), wobei das Kommunikationssignal eine Angabe eines verfügbaren Ladestroms umfasst;
einer Anpassungseinheit (22) zum Ermitteln eines angepassten verfügbaren Ladestroms basierend auf einem vordefinierten Anpassungsparameter;
einer Modifikationseinheit (24) zum Erzeugen eines modifizierten Kommunikationssignals mit einer Angabe des angepassten verfügbaren Ladestroms basierend auf dem empfangenen Kommunikationssignal; und
einer Fahrzeugschnittstelle (26) zum Weiterleiten des modifizierten Kommunikationssignals an das Elektrofahrzeug.

2. Vorrichtung (18) nach Anspruch 1, wobei die Modifikationseinheit (24) zum Erzeugen des modifizierten Kommunikationssignals durch Ersetzen der Angabe des verfügbaren Ladestroms durch die Angabe des angepassten verfügbaren Ladestroms in dem empfangenen Kommunikationssignal ausgebildet ist.

3. Vorrichtung (18) nach einem der vorstehenden Ansprüche, wobei die Kommunikationssignale Pulsweitenmodulationssignale (PWM-Signale) sind und die Modifikationseinheit (24) einen PWM-Manipulator umfasst.

4. Vorrichtung (18) nach einem der vorstehenden Ansprüche, wobei der vordefinierte Anpassungsparameter
einen Maximalwert für den Ladestrom umfasst;
ein Zeitprofil mit einer Zuordnung von Maximalwerten für den Ladestrom zu Uhrzeiten umfasst und die Anpassungseinheit (22) zum Ermitteln des angepassten Ladestroms basierend auf dem Zeitprofil und einer aktuellen Uhrzeit ausgebildet ist; und/oder
ein Spannungsprofil mit einer Zuordnung von Maximalwerten für den Ladestrom zu Netzspannungen umfasst und die Anpassungseinheit zum Ermitteln des angepassten Ladestroms basierend auf dem Spannungsprofil und einer aktuellen Netzspannung ausgebildet ist.

5. Vorrichtung (18) nach einem der vorstehenden Ansprüche, wobei
die Anpassungseinheit (22) zum Ermitteln des angepassten verfügbaren Ladestroms basierend auf dem verfügbaren Ladestrom ausgebildet ist; und
der angepasste verfügbare Ladestrom vorzugsweise geringer als der verfügbare Ladestrom ist.

6. Vorrichtung (18) nach einem der vorstehenden Ansprüche, wobei
die Fahrzeugschnittstelle (26) zum Empfangen eines zweiten Kommunikationssignals von dem Elektrofahrzeug (14) ausgebildet ist; und
die Ladeeinrichtungsschnittstelle (20) zum Übermitteln des zweiten Kommunikationssignals an die Ladeeinrichtung (16) ausgebildet ist.

7. Vorrichtung (18) nach einem der vorstehenden Ansprüche, wobei
das empfangene Kommunikationssignal eine Statusangabe umfasst; und
die Modifikationseinheit (24) dazu ausgebildet ist, das modifizierte Kommunikationssignal mit einer identischen Statusangabe zu erzeugen.

8. Vorrichtung (18) nach einem der vorstehenden Ansprüche, mit einer Steuerschnittstelle (30) zum Empfangen einer Steuerungsinformation von einer Steuerungsstelle, wobei
die Anpassungseinheit (22) zum Anpassen des vordefinierten Anpassungsparameters basierend auf der Steuerungsinformation ausgebildet ist; und
die Steuerschnittstelle vorzugsweise zum drahtlosen Kommunizieren, zum Kommunizieren mit einer Netzleitwarte eines Netzbetreibers, zum Kommunizieren mit einem Heimsteuersystem eines Betreibers der Ladeeinrichtung (16) und/oder zum Kommunizieren mit einem intelligenten Messsystem eines Messstellenbetreibers und zugehörigen Smart Meter Gateways zur Fernauslesung ausgebildet ist.

9. Vorrichtung (18) nach einem der vorstehenden Ansprüche, mit einer Benutzerschnittstelle (32) zum Empfangen einer Anpassungsinformation von einem Benutzer, wobei
die Anpassungseinheit (22) zum Anpassen des vordefinierten Anpassungsparameters basierend auf der Anpassungsinformation ausgebildet ist.

10. Vorrichtung (18) nach einem der vorstehenden Ansprüche, wobei
die Fahrzeugschnittstelle (26) als Ladestecker, vorzugsweise als Typ-2 Ladestecker, ausgebildet ist; und/oder
die Ladeeinrichtungsschnittstelle (20) und die Fahrzeugschnittstelle zum Übertragen des Kommunikationssignals in Form eines PP-Signals oder eines CP-Signals ausgebildet sind.

11. Vorrichtung (18) nach einem der vorstehenden Ansprüche, wobei
die Ladeeinrichtungsschnittstelle (20) zum Empfangen eines Ladestroms von der Ladeeinrichtung (16) ausgebildet ist und die Fahrzeugschnittstelle (26) zum Weiterleiten des Ladestroms an das Elektrofahrzeug (14) ausgebildet ist; und/oder
die Vorrichtung in ein Ladekabel (19), insbesondere ein Typ-2 Ladekabel, integriert ist oder als Adapter zum Einstecken in eine standardisierte Steckerbuchse, insbesondere eine Typ-2 Steckerbuchse, ausgebildet ist.

12. Vorrichtung (18) nach einem der vorstehenden Ansprüche, mit einer Asymmetrie-Überwachungseinheit (34) zum Begrenzen des Ladestroms auf einen vordefinierten Maximalwert.

13. System (10) zum Anpassen einer Ladeleistung beim Laden einer Batterie (12) eines Elektrofahrzeugs (14), mit:
einer Ladeeinrichtung (16) zum Bereitstellen eines Ladestroms und eines Kommunikationssignals mit einer Angabe eines verfügbaren Ladestroms;
einer Vorrichtung (18) nach einem der vorstehenden Ansprüche; und
einem Elektrofahrzeug mit einer Batterie.

14. Verfahren zum Anpassen einer Ladeleistung beim Laden einer Batterie (12) eines Elektrofahrzeugs (14), mit den Schritten:
Empfangen (S10) eines Ladestroms und eines Kommunikationssignals von einer Ladeeinrichtung (16), wobei das Kommunikationssignal eine Angabe eines verfügbaren Ladestroms umfasst;
Ermitteln (S12) eines angepassten verfügbaren Ladestroms basierend auf einem vordefinierten Anpassungsparameter;
Erzeugen (S14) eines modifizierten Kommunikationssignals mit einer Angabe des angepassten verfügbaren Ladestroms basierend auf dem empfangenen Kommunikationssignal; und
Weiterleiten (S16) des Ladestroms und des modifizierten Kommunikationssignals an das Elektrofahrzeug.

15. Computerprogrammprodukt mit Programmcode zum Durchführen der Schritte des Verfahrens nach Anspruch 14, wenn der Programmcode auf einem Computer ausgeführt wird.
